# EUROPEAN PATENT SPECIFICATION

(11) **EP 2 248 058 B1**
(45) Date of publication and mention of the grant of the patent: **05.04.2017**
(21) Application number: 09715104.7
(22) Date of filing: 10.02.2009
(51) Int. Cl.: G06F 21/10

(54) **PEER TO PEER SOFTWARE LICENSE MANAGEMENT SYSTEM FOR TEMPORARILY RELOCATING AVAILABLE SOFTWARE LICENSES**
PEER-TO-PEER-SOFTWARELIZENZVERWALTUNGSSYSTEM ZUR VORÜBERGEHENDEN UMLAGERUNG VERFÜGBARER SOFTWARELIZENZEN
SYSTÈME DE GESTION DE LICENCE DE LOGICIEL DE POSTE-À-POSTE EN VUE DE LA RÉINSTALLATION TEMPORAIRE DE LICENCES DE LOGICIEL DISPONIBLES

(30) Priority: 28.02.2008 US 39609
(43) Date of publication of application: 10.11.2010
(73) Proprietor: Honeywell International Inc., Morris Plains, NJ 07950 (US)
(72) Inventor: PAVAN, David, John, Calgary Alberta T2N 2N7 (CA); ELLIOTT, Christopher, Daniel, Calgary Alberta T2Y 4M9 (CA); NORRIS, Samuel, Grosvenor, Victoria British Columbia V8S 4X1 (CA)
(74) Representative: Houghton, Mark Phillip
(86) International application number: PCT/US2009/033630
(87) International publication number: WO 2009/108487

(56) References cited:
- EP-A1- 0 715 245
- WO-A2-2006/054988
- JP-A- 2007 249 804
- US-A- 5 745 879
- US-A1- 2006 143 134
- US-A1- 2007 233 782
- US-B1- 7 162 538

## Description

### TECHNICAL FIELD

This disclosure relates generally to software license management systems and more specifically to a peer to peer software license management system for temporarily relocating available software licenses.

### BACKGROUND

Software license management is an essential service for any commercial software product to ensure the legitimate usage of the software product and to ensure the proper distribution of the software product. Software license providers ("license providers") are typically located within software that is located on a computer server. Software license consumers ("licenses consumers") are typically software applications that are located on a computer workstation or computer server. Existing software license management systems are based upon the ability of the software provider to communicate securely with the software license consumers.

A license provider has a finite number of software licenses ("licenses") stored within the computer server on which the license provider is located. The license provider typically has an encrypted license file that contains the names of the licenses and the names of the customers (i.e., license consumers) that are authorized to receive the licenses.

When a license consumer desires to obtain particular software licenses, the license consumer may attempt to acquire the licenses from one or more license providers. The license consumer sends a license request to one or more license providers. A license provider that can satisfy the license consumer's request (1) licenses the requested license (or licenses) to the license consumer, (2) marks the requested license (or licenses) as being in use by the license consumer, and (3) establishes and maintains a secure communication link with the license consumer.

The license provider maintains the secure communication link with the license consumer until the license consumer releases the license (or licenses) or the link with the license consumer fails due to a hardware or software fault, thereby implicitly releasing the license (or licenses). A license that is marked as being in use is not available to other license consumers until the license has been released. Licenses that are released re-enter the available license pool of the license provider.

The encrypted license file in the software license management system may be stored on a disk drive or other memory device such as a Univeral Serial Bus (USB) key or smartcard. As previously mentioned, the encrypted license file contains the names of the authorized license consumers and the names of the licenses that they are authorized to receive. The software license management system is capable of reading the authorization information in the encrypted license file and serving the requested licenses to the license consumers that have the proper authorization.

The software license management system typically resides at a location that is remote from the location of the software applications that it licenses. This provides a more convenient centralized administration of the license process. In existing software license management systems, the license provider (located on a license server) is located at a remote location with respect to the license consumer (located on a client server).

Dedicated license servers are not efficient in mobile computing scenarios. For example, dedicated license servers are not efficient at supporting software product demonstrations or training operations at remote non-fixed locations. Prior art approaches to providing software licenses in mobile computing scenarios include providing (for an additional fee) (1) short-term or dedicated entitlement to support mobile use, (2) portable entitlement in the form of hardware keys, (3) temporary offline stand-alone licenses, and (4) node-locked licenses that are not network-based.

Document US5745879 describes a license
system for borrowing licenses.

It would be desirable to have a more efficient method for providing software license entitlement in mobile computing scenarios. It would be desirable to have a software license management system that has the ability to temporarily relocate available software licenses in mobile computing scenarios.

### SUMMARY

The present invention provides apparatus as defined in claim 1. The system may include the features of any one or more of dependent claims 2 to 7.
The present invention also provides a system as defined in claim 8. The system may include the features of claim 9.
The present invention also provides a method as defined in claim 10. The method may include the features of any one or more of dependent claims 11 to 14.

The present invention provides a peer to peer software license management system that is capable of temporarily relocating available software licenses. The present invention comprises a peer to peer software license management system in which any node (i.e., any computer in which the software license management system software of the invention is installed) is allowed to act as a license provider, or act as a license consumer, or act as both a license provider and a license consumer.

Any node of the peer to peer software license management system of the invention has the capacity (1) to temporarily borrow a software license from another node, and (2) re-serve the borrowed software license to yet another node as if the node that borrowed the software license were itself a license provider. Each node of the peer to peer software license management system of the invention operates as both a license consumer and a license provider.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates a schematic representation of an exemplary first computer node of the peer to peer software license management system of the invention;
FIGURE 2 illustrates a schematic representation of a first computer node of the invention accessing a software license from a second computer node of the invention;
FIGURE 3 illustrates a schematic representation of a first computer node of the invention temporarily borrowing a software license from a second computer node of the invention;
FIGURE 4 illustrates a schematic representation of a third computer node of the invention accessing a temporarily borrowed software license from the first computer node of the invention;
FIGURE 5 illustrates a flow chart showing the steps of an advantageous embodiment of a method of the present invention; and
FIGURE 6 illustrates a flow chart showing the steps of another advantageous embodiment of a method of the present invention.

### DETAILED DESCRIPTION

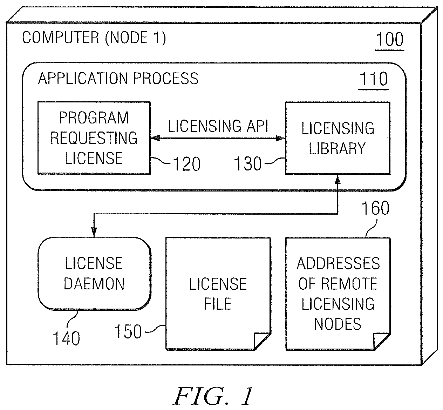

FIGURES 1 through 6 and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

Every computer that participates in the peer to peer software license management system of the invention is referred to as a node. In a peer to peer system, each node can accept incoming connections from other nodes and each node can initiate outgoing connections to other nodes. This feature distinguishes a peer to peer system from a client-server system. In a client-server system, only client nodes can initiate outgoing connections and only server nodes can accept incoming connections.

FIGURE 1 illustrates a schematic representation of an exemplary first computer node 100 (also designated as node 1) of the peer to peer software license management system of the invention. First computer node 100 is representative of each of the other nodes in the system (not shown in FIGURE 1). As shown in FIGURE 1, first computer node 100 comprises an application process 110. Application process 110 comprises at least one program 120 and a licensing library 130. The licensing library 130 contains one or more software licenses. The program 120 is capable of accessing the licensing library 130 through a licensing application programming interface (designated as "Licensing API" in FIGURE 1).

First computer node 100 also comprises a continuously running program that is referred to as a license service 140 or a license daemon 140. The license daemon 140 is connected to and in communication with the licensing library 130. The licensing library 130 is capable of accessing the license daemon 140 to pass on to the license daemon 140 any license requests that are made by the program 120.

First computer node 100 also comprises an encrypted license file 150. The encrypted license file 150 contains the names of authorized license consumers and the names of the licenses that they are authorized to receive. The license daemon 140 is connected to and in communication with the encrypted license file 150. The license daemon 140 is capable of reading the authorization information in the encrypted license file 150 and serving the requested licenses to the license consumers that have the proper authorization.

First computer node 100 also comprises an address file 160 that contains computer addresses of remotely located licensing nodes in the peer to peer system. The license daemon 140 is connected to and in communication with the address file 160. The license daemon 140 is capable of communicating with the remotely located nodes in the peer to peer system.

The standard computer hardware of computer node 100 (central processing unit, memory units, etc.) and the standard computer software of computer node 100 (operating system, etc.) together with the software of the peer to peer software license management system of the invention (license daemon, license file, licensing library, etc.) comprises a software license management controller that performs the functions of the present invention.

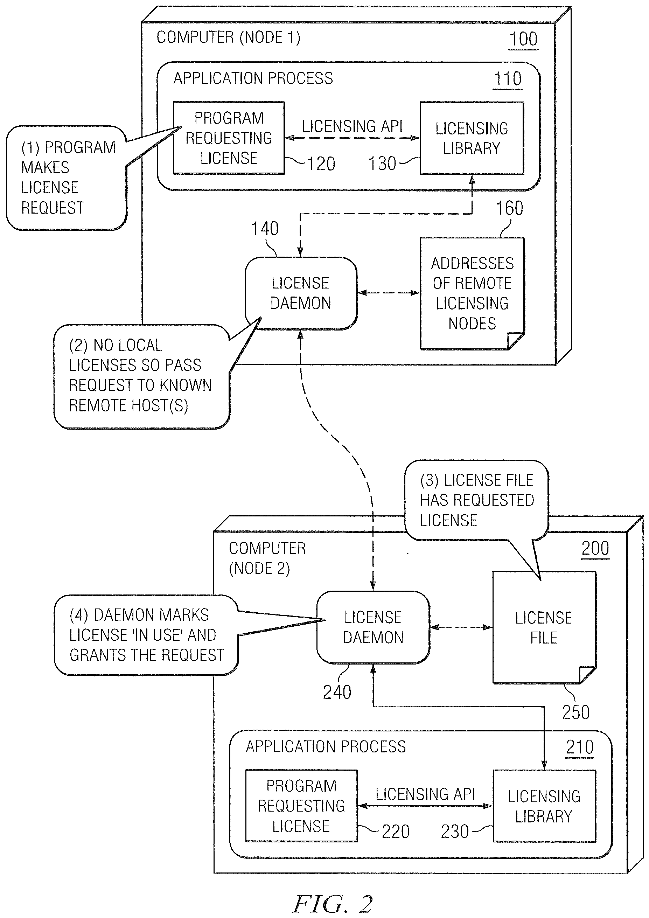

FIGURE 2 illustrates a schematic representation of the first computer node 100 accessing a software license from a second computer node 200 of the peer to peer system of the invention. Second computer node 200 comprises an application process 210 that comprises at least one program 220 and a licensing library 230. Second computer node 200 also comprises its own license daemon 240 and encrypted license file 250. Although not shown in FIGURE 2, the second computer node 200 also comprises an address file that contains computer addresses of remotely located licensing nodes in the peer to peer system.

FIGURE 2 illustrates how the first computer node 100 may access a software license from the second computer node 200 in the peer to peer system. When the at least one program 120 makes a license request, the licensing library 130 sends the request to the license daemon 140. The license daemon 140 first attempts to access (or to "check out") the requested license from its own encrypted license file 150 (not shown in FIGURE 2). If the requested license is in the encrypted license file 150, then the license daemon 140 provides the requested license to the program 120 from the licensing library 130.

If the requested license is not in the encrypted license file 150 (i.e., the requested license is not locally available), then the license daemon 140 passes the license request to the known remote nodes (which are also referred to as remote hosts). FIGURE 2 illustrates the connection and communication between license daemon 140 of the first computer node 100 and the license daemon 240 of the second computer node 200.

The license daemon 240 accesses its own encrypted license file 250 to determine whether the requested license is located within the second computer node 200. If the requested license is located within the encrypted license file 250, then the license daemon 240 marks the requested license as being in use and grants the license request. The license daemon 240 provides the requested license to the license daemon 140 from the licensing library 230. The license daemon 140 provides the requested license to the licensing library 130 and to the requesting program 120.

If the requested license is not located within the encrypted license file 250 in the second computer node 200, then the license daemon 240 reports that finding back to the license daemon 140 in the first computer node 100.

When the license daemon 140 sends out a license request to the other nodes in the peer to peer network, the other nodes will cascade the request to other nodes in their local address list (if any) until the requested license is found or the license search fails due the lack of availability of the requested license on any node that is connected in the peer to peer network.

In the search for a requested license, a success or a failure will be reported back to the requesting program 120 via the API link. A successfully accessed license will eventually be returned to the remote computer node from which the license came (1) when the requesting program 120 releases the license via the API link or (2) when the requesting program 120 terminates. Returning the license to the remote computer node from which the license came requires the local license daemon 140 to track where the license originated and to communicate with the license daemon on the remote computer node (e.g., license daemon 240 in our present example) to inform the license daemon on the remote computer node of the eventual release of the requested license. After the requested license has been released, the license daemon on the remote computer node that provided the requested license from its local encrypted license file releases the license back into the local pool of licenses that are eligible for a subsequent license.

In order prevent abuse of license entitlement, the license daemon of the computer node that provides the requested license generates and sends an occasional "all is well" signal (referred to as a "heartbeat") to all of the other computer nodes that are participating in a license access (also referred to as a license "checkout"). If for some reason the heartbeat signal is not acknowledged as expected, then the heartbeat signal is said to have failed. If the heartbeat signal fails, then all license daemons that are involved in the license checkout process immediately consider that the license checkout process has failed.

The failure of the heartbeat signal results in the requesting program (e.g., program 120) being informed via the API link that a license that it had successfully requested is now unavailable and that the previously successful license request has been terminated. The license daemon that provided the requested license from its local encrypted license file then releases the license back into the local pool of licenses that are eligible for a subsequent license. No heartbeat signal is required when a license request is satisfied from a local license file.

In addition to being checked out, licenses can also be borrowed. Borrowing a license entails relocating a license from one license file to another license file for a predetermined (but finite) period of time.

A license daemon in a computer node can request to borrow one or more licenses from another computer node. The license borrowing process is conceptually similar to a normal license check out process from one node to another. But there is no heartbeat signal maintained between the two nodes that are involved in the borrowing transaction. This is so that the borrowing node can be disconnected from the network of the donor node and continue to use the borrowed license while the borrowing node is offline (i.e., not connected to the peer to peer network). The donor node considers that the borrowed license has been checked out. But the borrowing node considers the borrowed license to be available for check out by programs that are running locally on the borrowing node.

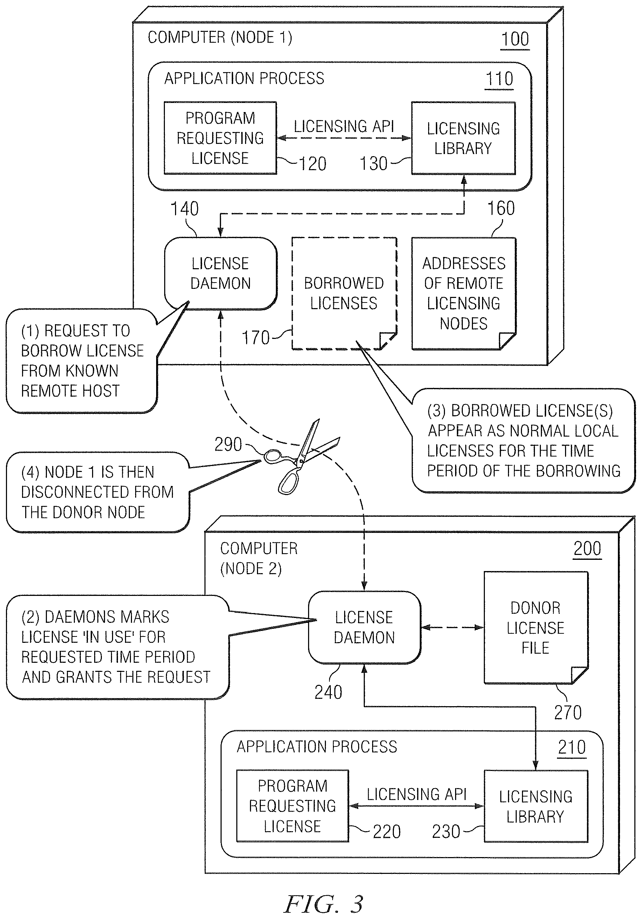

FIGURE 3 illustrates how the first computer node 100 may temporarily borrow a software license from the second computer node 200 in the peer to peer system. When the at least one program 120 makes a license request, the licensing library 130 sends the request to the license daemon 140. The license daemon 140 first attempts to access (or to "check out") the requested license from its own encrypted license file 150 (not shown in FIGURE 3). If the requested license is in the encrypted license file 150, then the license daemon 140 provides the requested license to the program 120 from the licensing library 130.

If the requested license is not in the encrypted license file 150 (i.e., the requested license is not locally available), then the license daemon 140 may issue a request to borrow the license from one of the known remote nodes (which are also referred to as remote hosts). FIGURE 3 illustrates the connection and communication between license daemon 140 of the first computer node 100 and the license daemon 240 of the second computer node 200. Although not shown in FIGURE 3, the second computer node 200 comprises a previously mentioned address file that contains computer addresses of remotely located licensing nodes in the peer to peer system.

The license daemon 240 accesses a donor license file 270 to determine whether the requested license is a license that is authorized to be "loaned" out as a borrowed license. If the requested license is located within the donor license file 270, then the license daemon 240 marks the requested license as being in use for the requested time period and grants the license request. The license daemon 240 provides the requested borrowed license to the license daemon 140 from the licensing library 230. The license daemon 140 stores the requested borrowed license in a borrowed licenses file 170 and allows the requesting program 120 to access the requested borrowed license.

If the requested borrowed license is not located within the donor license file 270, then the license daemon 240 reports that finding back to the license daemon 140 in the first computer node 100.

When the license daemon 140 sends out a request to borrow a license to the other nodes in the peer to peer network, the other nodes will cascade the request to other nodes in their local address list (if any) until the requested license is found or the license search fails due the lack of availability of the requested license on any node that is connected in the peer to peer network.

As previously mentioned, when the license daemon 240 sends the borrowed license to the license daemon 140, the license daemon 140 stores the borrowed license in the borrowed licenses file 170. The borrowed licenses that are stored in the borrowed licenses file 170 in the first computer node 100 appear as normal local licenses during the requested time period (i.e., the "lifetime" of the borrowed license).

After the borrowed license is successfully stored in the borrowed licenses file 170 in the first computer node 100, the network connection between the license daemon 140 of first computer node 100 and the license daemon 240 of the second computer node 200 is severed. The severance is schematically represented in FIGURE 3 with the scissors symbol 290. The borrowing node (first computer node 100 in our present example) may continue to use the borrowed license while offline (i.e., not connected to the peer to peer network).

The borrowing node (first computer node 100 in our present example) may check the borrowed license back into the donor node (second computer node 200 in our present example) at any time the borrowing node and the donor node are connected on a common network. Checking the borrowed license back into the donor node ends the period of borrowing.

To secure the borrowing transaction and enforce the time limit for the borrowed license, it is necessary to specify a maximum borrowing time limit at the time when the borrowed license is borrowed. The maximum borrowing time limit (also referred to as the "timeout" value) is tracked independently by both the donor node and the borrowing node. If the timeout value expires before the borrowed license is returned to the donor node from the borrowing node, then the borrowed license will automatically be disabled on the borrower node and will automatically be enabled on the donor node (i.e., checked back into the donor node).

During the time that the borrowed license is still within the timeout value, the borrowed license remains valid. Furthermore, a valid borrowed license is considered to be available for checkout from the borrowing node. Due to the peer to peer capabilities of the network, the borrowed license is not restricted to checkout only by programs that are running on the borrowing node. That is, the borrowed license may be served to other connecting nodes that request it. This means that a license can be temporarily relocated from a donor node (that acts as a license server) to a borrowing node (that subsequently goes offline with respect to the donor node) and the borrowing node can subsequently act as a license server for the borrowed license.

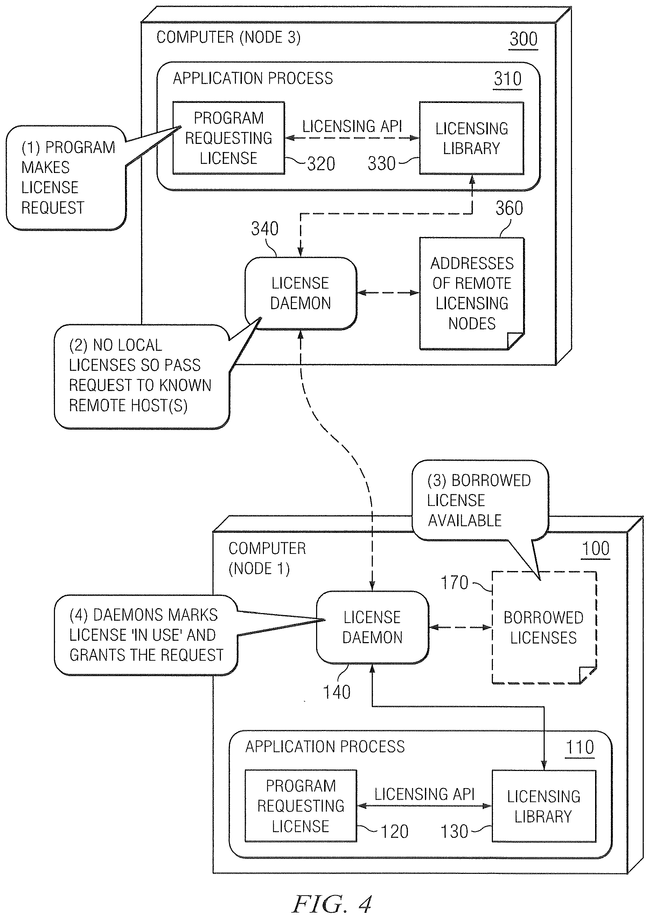

FIGURE 4 illustrates how the first computer node 100 may act as a license server for a borrowed license and serve the borrowed license to a third computer node 300 in the peer to peer system. Third computer node 300 comprises an application process 310 that further comprises at least one program 320 and a licensing library 330. Third computer node 300 also comprises its own license daemon 340 and address file 360. Although not shown in FIGURE 4, the third computer node 300 also comprises an encrypted license file.

When the at least one program 320 makes a license request, the licensing library 330 sends the request to the license daemon 340. The license daemon 340 first attempts to access (or to "check out") the requested license from its own encrypted license file (not shown in FIGURE 4). If the requested license is in the encrypted license file, then the license daemon 340 provides the requested license to the program 320 from the licensing library 330.

If the requested license is not in the encrypted license file (i.e., the requested license is not locally available), then the license daemon 340 may issue a request to access (or "check out") the license from one of the known remote nodes (which are also referred to as remote hosts). FIGURE 4 illustrates the connection and communication between license daemon 340 of the third computer node 300 and the license daemon 140 of the first computer node 100. Although not shown in FIGURE 4, the first computer node 100 comprises an encrypted license file 150 and an address file 160 that contains computer addresses of remotely located licensing nodes in the peer to peer system.

The license daemon 140 accesses the borrowed licenses file 170 to determine whether the requested license is available. If the requested license is located within the borrowed licenses file 170, then the license daemon 140 marks the requested license as being in use and grants the license request. The license daemon 140 provides the requested license to the licensing daemon 340 from the borrowed licenses file 170. The license daemon 340 provides the borrowed license to the licensing library 330 and to the requesting program 320.

If the requested license is not located within the borrowed licenses file 170, then the license daemon 140 reports that finding back to the license daemon 340 in the third computer node 300.

When the license daemon 340 sends out a request to access a license to the other nodes in the peer to peer network, the other nodes will cascade the request to other nodes in their local address list (if any) until the requested license is found or the license search fails due the lack of availability of the requested license on any node that is connected in the peer to peer network.

As previously mentioned, when the license daemon 140 sends the borrowed license to the license daemon 340, the license daemon 340 provides the borrowed license to the program 320. The first computer node 100 is a borrowing node that has gone offline with respect to the original donor node (second computer node 200). In this manner, the first computer node 100 acts in turn as a license server that serves the previously borrowed license to the third computer node 300.

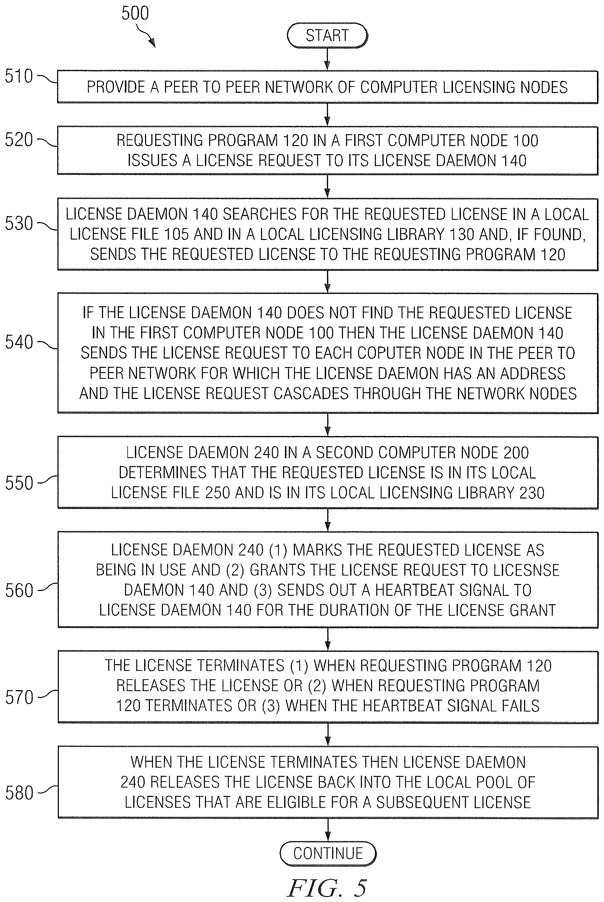

FIGURE 5 illustrates a flow chart 500 that shows the steps of an advantageous embodiment of a method of the present invention. In the first step, a peer to peer network of computer licensing nodes is provided (step 510). Then a requesting program 120 in a first computer node 100 issues a license request to its license daemon 140 (step 520). The license daemon 140 searches for the requested license in a local license file 150 and in a local licensing library 130 and, if found, sends the requested license to the requesting program 120 (step 530).

If the license daemon 140 does not find the requested license in the first computer node 100 then the license daemon 140 sends the license request to each computer node in the peer to peer network for which the license daemon 140 has an address and the license request cascades through the network nodes (step 540). Then a license daemon 240 in a second computer node 200 determines that the requested license is in its local license file 250 and is in its local licensing library 230 (step 550).

Then the license daemon 240 (1) marks the requested license as being in use and (2) grants the license request to license daemon 140 and (3) sends out a heartbeat signal to license daemon 140 for the duration of the license grant (step 560). The license terminates when (1) requesting program 120 releases the license or (2) when requesting program 120 terminates or (3) when the heartbeat signal fails (step 570). When the license terminates then license daemon 240 releases the license back into the local pool of licenses that are eligible for a subsequent license (step 580).

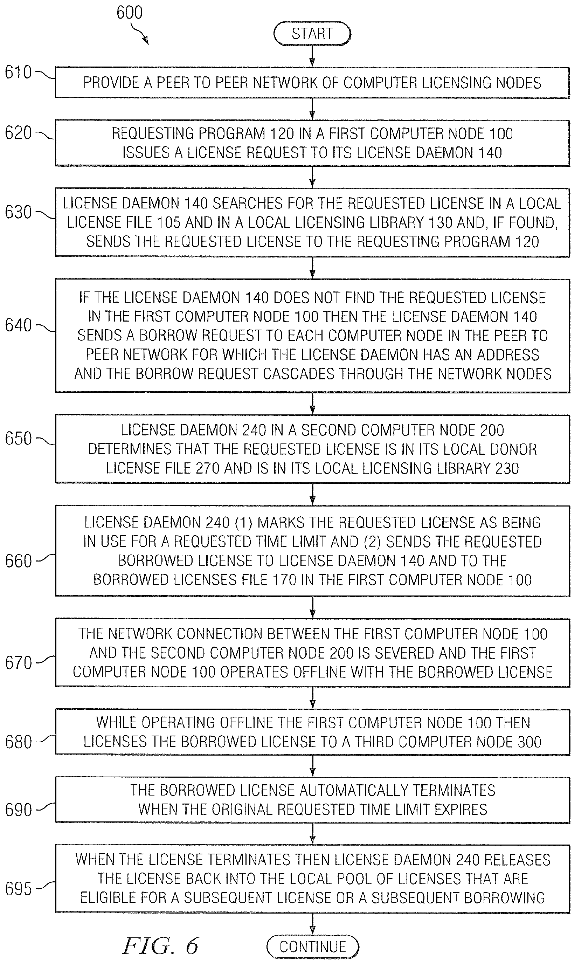

FIGURE 6 illustrates a flow chart 600 that shows the steps of another advantageous embodiment of a method of the present invention. In the first step, a peer to peer network of computer licensing nodes is provided (step 610). Then a requesting program 120 in a first computer node 100 issues a license request to its license daemon 140 (step 620). The license daemon 140 searches for the requested license in a local license file 150 and in a local licensing library 130 and, if found, sends the requested license to the requesting program 120 (step 630).

If the license daemon 140 does not find the requested license in the first computer node 100 then the license daemon 140 sends a borrow request to each computer node in the peer to peer network for which the license daemon 140 has an address and the borrow request cascades through the network nodes (step 640). Then a license daemon 240 in a second computer node 200 determines that the requested license is in its local donor file 270 and is in its local licensing library 230 (step 650).

Then the license daemon 240 (1) marks the requested license as being in use for a requested time limit and (2) sends the requested borrowed license to license daemon 140 and to the borrowed licenses file 270 in the first computer node 100 (step 660). The network connection between the first computer node 100 and the second computer node 200 is then severed and the first computer node 100 operates offline with the borrowed license (step 670).

While operating offline the first computer node 100 then licenses the borrowed license to a third computer node 300 (step 680). The borrowed license automatically terminates when the original requested time limit expires (step 690). When the borrowed license terminates then license daemon 240 releases the borrowed license back into the local pool of licenses that are eligible for a subsequent license or a subsequent borrowing (step 695).

It may be advantageous to set forth definitions of certain words and phrases used throughout this patent document. The terms "application," "program," and "routine" refer to one or more computer programs, sets of instructions, procedures, functions, objects, classes, instances, or related data adapted for implementation in a suitable computer language. The term "couple" and its derivatives refer to any direct or indirect communication between two or more elements, whether or not those elements are in physical contact with one another.

The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. The term "controller" means any device, system, or part thereof that controls at least one operation. A controller may be implemented in hardware, firmware, software, or some combination of at least two of the same. The functionality associated with any particular controller may be centralized or distributed, whether locally or remotely.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of the invention, as defined by the following claims.

## Claims

1. An apparatus for managing software licenses comprising:
a first computer node (100) comprising a computing device configured to connect to at least a second computer node (200) and a third computer node (300) in a peer-to-peer computer network;
wherein the first computer node comprises a software license management controller configured to:
temporarily receive a software license for a software product from a software license management controller in the second computer node;
receive a request for the received software license from a software license management controller in the third computer node;
determine whether the request is to borrow the software license or to check out the software license;
when the request is to borrow the software license, send the received software license to the software license management controller in the third computer node for a period of time;
when the request is to check out the software license:
send a license grant for the received software license for an indefinite period of time to the software license management controller in the third computer node;
send a heartbeat signal to the software license management controller in the third computer node for a duration of the license grant;
determine whether a response is received to the heartbeat signal; and
based on a failure to receive the response to the heartbeat signal, terminate the license grant to the software license management controller in the third computer node; and
use the software license for the software product at the first computer node (i) after the period of time elapses but not during the period of time when the request is to borrow the software license and (ii) after the license grant to the software license management controller in the third computer node is terminated when the request is to check out the software license.

2. The apparatus as set forth in Claim 1, wherein the software license management controller in the first computer node comprises a license daemon (140) that is configured to communicate with other license daemons (240, 340) in other computer nodes including the second and third computer nodes.

3. The apparatus as set forth in Claim 2, wherein the license daemon in the first computer node, in response to receiving a request for the software license from a requesting program in the first computer node, is configured to search for the requested software license in the first computer node.

4. The apparatus as set forth in Claim 3, wherein the license daemon in the first computer node, in response to not finding the requested software license in the first computer node, is configured to send to the other license daemons in the other computer nodes a request to borrow the requested software license.

5. The apparatus as set forth in Claim 1, wherein the software license provided to the third computer node terminates upon one of:
a requesting program in the third computer node releases the software license;
the requesting program in the third computer node terminates operation; and
the heartbeat signal from the third computer node fails.

6. The apparatus as set forth in Claim 1, wherein the first computer node is configured to allow, when the request is to borrow the software license, the third computer node to use the sent software license while the third computer node is disconnected from the first computer node.

7. The apparatus as set forth in Claim 1, wherein the software license management controller in the first computer node is further configured to automatically terminate the license to the third computer node for the borrowed software license after expiration of the period of time.

8. A system comprising:
the apparatus comprising the first computer node (100) of any of Claims 1 through 7;
the second computer node (200); and
the third computer node (300);
wherein a license daemon (240) in the second computer node is configured to:
determine that the software license is available from the second computer node in response to a request from a license daemon (140) in the first computer node;
mark the requested software license as being in use for a requested time limit; and
send the requested software license to the license daemon in the first computer node.

9. The system as set forth in Claim 8, wherein the first computer node is configured to be severed from the second computer node after the first computer node has received the software license from the second computer node.

10. A method for managing software licenses comprising:
operating a software license management controller within a first computer node (100), the first computer node comprising a computing device configured to connect to at least a second computer node (200) and a third computer node (300) in a peer-to-peer computer network;
temporarily receiving a software license for a software product from a software license management controller of the second computer node for use by the software license management controller of the first computer node;
receiving a request for the received software license from a software license management controller in the third computer node;
determining whether the request is to borrow the software license or to check out the software license;
when the request is to borrow the software license, sending, using the software license management controller of the first computer node, the received software license to the software license management controller in the third computer node for a period of time;
when the request is to check out the software license:
sending a license grant for the received software license for an indefinite period of time to the software license management controller in the third computer node;
sending a heartbeat signal to the software license management controller in the third computer node for a duration of the license grant;
determining whether a response is received to the heartbeat signal; and
based on a failure to receive the response to the heartbeat signal, terminating the license grant to the software license management controller in the third computer node; and
using the software license for the software product at the first computer node (i) after the period of time elapses but not during the period of time when the request is to borrow the software license and (ii) after the license grant to the software license management controller in the third computer node is terminated when the request is to check out the software license.

11. The method as set forth in Claim 10, further comprising:
severing a connection between the first computer node and the second computer node after the first computer node has received the software license from the second computer node.

12. The method as set forth in Claim 10, further comprising:
receiving, in a license daemon (140) in the software license management controller of the first computer node, a request for the software license from a requesting program in the first computer node;
searching for the requested software license in the first computer node; and
in response to not finding the requested software license in the first computer node, sending a request to borrow the requested software license from the license daemon in the first computer node to other license daemons (240, 340) in other computer nodes.

13. The method as set forth in Claim 12, further comprising:
determining, by a license daemon (240) in the second computer node, that the requested software license is located in the second computer node;
marking, by the license daemon in the second computer node, that the requested software license is in use for a requested time period;
sending the requested software license from the license daemon in the second computer node to the license daemon in the first computer node; and
severing a connection between the first computer node and the second computer node.

14. The method as set forth in Claim 13, wherein:
sending the received software license to the third computer node comprises sending the received software license by the license daemon in the first computer node to a license daemon (340) in the third computer node; and
the method further comprises automatically terminating the sent software license after expiration of the period of time.

## Patentansprüche

1. Vorrichtung zum Managen von Software-Lizenzen, die Folgendes umfasst:
einen ersten Computerknoten (100), der eine Computervorrichtung umfasst, die konfiguriert ist, mit wenigstens einem zweiten Computerknoten (200) und einem dritten Computerknoten (300) in einem Peer-zu-Peer-Computernetz verbunden zu sein;
wobei der erste Computerknoten einen Software-Lizenz-Management-Controller umfasst, der konfiguriert ist:
eine Software-Lizenz für ein Software-Produkt von einem Software-Lizenz-Management-Controller in dem zweiten Computerknoten vorübergehend zu empfangen;
eine Anforderung für die empfangene Software-Lizenz von einem Software-Lizenz-Management-Controller in dem dritten Computerknoten zu empfangen;
zu bestimmen, ob die Anforderung ist, die Software-Lizenz auszuleihen oder die Software-Lizenz auszuprobieren;
wenn die Anforderung ist, die Software-Lizenz auszuleihen, die empfangene Software-Lizenz für einen Zeitraum an den Software-Lizenz-Management-Controller in dem dritten Computerknoten zu senden;
wenn die Anforderung ist, die Software-Lizenz auszuprobieren:
eine Lizenzbewilligung für die empfangene Software-Lizenz für einen unbestimmten Zeitraum an den Software-Lizenz-Management-Controller in dem dritten Computerknoten zu senden;
ein Herzschlagsignal während der Dauer der Lizenzbewilligung an den Software-Lizenz-Management-Controller in dem dritten Computerknoten zu senden;
zu bestimmen, ob eine Reaktion auf das Herzschlagsignal empfangen wird; und
basierend auf einem Fehlschlag, die Reaktion auf das Herzschlagsignal zu empfangen, die Lizenzbewilligung für den Software-Lizenz-Management-Controller in dem dritten Computerknoten zu beenden; und
die Software-Lizenz für das Software-Produkt an dem ersten Computerknoten (i) nachdem der Zeitraum vergangen ist, aber nicht während des Zeitraums, wenn die Anforderung ist, die Software-Lizenz auszuleihen, und (ii) nachdem die Lizenzbewilligung für den Software-Lizenz-Management-Controller in dem dritten Computerknoten beendet ist, wenn die Anforderung ist, die Software-Lizenz auszuprobieren, zu verwenden.

2. Vorrichtung nach Anspruch 1, wobei der Software-Lizenz-Management-Controller in dem ersten Computerknoten einen Lizenz-Daemon (140) umfasst, der konfiguriert ist, mit anderen Lizenz-Daemons (240, 340) in anderen Computerknoten einschließlich des zweiten und des dritten Computerknotens zu kommunizieren.

3. Vorrichtung nach Anspruch 2, wobei der Lizenz-Daemon in dem ersten Computerknoten in Reaktion auf das Empfangen einer Anforderung für die Software-Lizenz von einem anfordernden Programm in dem ersten Computerknoten konfiguriert ist, nach der angeforderten Software-Lizenz in dem ersten Computerknoten zu suchen.

4. Vorrichtung nach Anspruch 3, wobei der Lizenz-Daemon in dem ersten Computerknoten in Reaktion darauf, dass die angeforderte Software-Lizenz in dem ersten Computerknoten nicht gefunden wird, konfiguriert ist, eine Anforderung, die angeforderte Software-Lizenz auszuleihen, an die anderen Lizenz-Daemons in den anderen Computerknoten zu senden.

5. Vorrichtung nach Anspruch 1, wobei die dem dritten Computerknoten bereitgestellte Software-Lizenz bei einem des Folgenden endet:
ein anforderndes Programm in dem dritten Computerknoten gibt die Software-Lizenz frei;
das anfordernde Programm in dem dritten Computerknoten beendet den Betrieb;
das Herzschlagsignal von dem dritten Computerknoten fällt aus.

6. Vorrichtung nach Anspruch 1, wobei der erste Computerknoten konfiguriert ist, es dem dritten Computerknoten zu erlauben, die gesendete Software-Lizenz zu verwenden, während der dritte Computerknoten von dem ersten Computerknoten getrennt ist, wenn die Anforderung ist, die Software-Lizenz auszuleihen.

7. Vorrichtung nach Anspruch 1, wobei der Software-Lizenz-Management-Controller in dem ersten Computerknoten ferner konfiguriert ist, die Lizenz für den dritten Computerknoten für die ausgeliehene Software-Lizenz nach dem Ablauf des Zeitraums automatisch zu beenden.

8. System, das Folgendes umfasst:
die Vorrichtung, die den ersten Computerknoten (100) umfasst, nach einem der Ansprüche 1 bis 7;
den zweiten Computerknoten (200); und
den dritten Computerknoten (300);
wobei ein Lizenz-Daemon (240) in dem zweiten Computerknoten konfiguriert ist:
in Reaktion auf eine Anforderung von einem Lizenz-Daemon (140) in dem ersten Computerknoten zu bestimmen, dass die Software-Lizenz von dem zweiten Computerknoten verfügbar ist;
die angeforderte Software-Lizenz als während einer angeforderten Zeitgrenze als in Gebrauch zu markieren; und
die angeforderte Software-Lizenz an den Lizenz-Daemon in dem ersten Computerknoten zu senden.

9. System nach Anspruch 8, wobei der erste Computerknoten konfiguriert ist, von dem zweiten Computerknoten getrennt zu werden, nachdem der erste Computerknoten die Software-Lizenz von dem zweiten Computerknoten empfangen hat.

10. Verfahren zum Managen von Software-Lizenzen, das Folgendes umfasst:
Betreiben eines Software-Lizenz-Management-Controllers innerhalb eines ersten Computerknotens (100), wobei der erste Computerknoten eine Computervorrichtung umfasst, die konfiguriert ist, mit wenigstens einem zweiten Computerknoten (200) und einem dritten Computerknoten (300) in einem Peer-zu-Peer-Computernetz verbunden zu sein;
vorübergehendes Empfangen einer Software-Lizenz für ein Software-Produkt von einem Software-Lizenz-Management-Controller des zweiten Computerknotens für die Verwendung durch den Software-Lizenz-Management-Controller des ersten Computerknotens;
Empfangen einer Anforderung für die empfangene Software-Lizenz von einem Software-Lizenz-Management-Controller in dem dritten Computerknoten;
Bestimmen, ob die Anforderung ist, die Software-Lizenz auszuleihen oder die Software-Lizenz auszuprobieren;
wenn die Anforderung ist, die Software-Lizenz auszuleihen, Senden unter Verwendung des Software-Lizenz-Management-Controllers des ersten Computerknotens der empfangenen Software-Lizenz für einen Zeitraum an den Software-Lizenz-Management-Controller in dem dritten Computerknoten;
wenn die Anforderung ist, die Software-Lizenz auszuprobieren:
Senden einer Lizenzbewilligung für die empfangene Software-Lizenz für einen unbestimmten Zeitraum an den Software-Lizenz-Management-Controller in dem dritten Computerknoten;
Senden eines Herzschlagsignals während einer Dauer der Lizenzbewilligung an den Software-Lizenz-Management-Controller in dem dritten Computerknoten;
Bestimmen, ob eine Reaktion auf das Herzschlagsignal empfangen wird; und
basierend auf einem Fehlschlag, die Reaktion auf das Herzschlagsignal zu empfangen, Beenden der Lizenzbewilligung für den Software-Lizenz-Management-Controller in dem dritten Computerknoten; und
Verwenden der Software-Lizenz für das Software-Produkt an dem ersten Computerknoten (i) nachdem der Zeitraum vergangen ist, aber nicht während des Zeitraums, wenn die Anforderung ist, die Software-Lizenz auszuleihen, und (ii) nachdem die Lizenzbewilligung für den Software-Lizenz-Management-Controller in dem dritten Computerknoten beendet ist, wenn die Anforderung ist, die Software-Lizenz auszuprobieren.

11. Verfahren nach Anspruch 10, das ferner Folgendes umfasst:
Trennen einer Verbindung zwischen dem ersten Computerknoten und dem zweiten Computerknoten, nachdem der erste Computerknoten die Software-Lizenz von dem zweiten Computerknoten empfangen hat.

12. Verfahren nach Anspruch 10, das ferner Folgendes umfasst:
Empfangen in einem Lizenz-Daemon (140) in dem Software-Lizenz-Management-Controller des ersten Computerknotens einer Anforderung für die Software-Lizenz von einem anfordernden Programm in dem ersten Computerknoten;
Suchen nach der angeforderten Software-Lizenz in dem ersten Computerknoten; und
in Reaktion darauf, dass die angeforderte Software-Lizenz in dem ersten Computerknoten nicht gefunden wird, Senden einer Anforderung, die angeforderte Software-Lizenz auszuleihen, von dem Lizenz-Daemon in dem ersten Computerknoten an die anderen Lizenz-Daemons (240, 340) in den anderen Computerknoten.

13. Verfahren nach Anspruch 12, das ferner Folgendes umfasst:
Bestimmen durch einen Lizenz-Daemon (240) in dem zweiten Computerknoten, dass sich die angeforderte Software-Lizenz in dem zweiten Computerknoten befindet;
Markieren durch den Lizenz-Daemon in dem zweiten Computerknoten, dass sich die angeforderte Software-Lizenz während eines angeforderten Zeitraums in Gebrauch befindet;
Senden der angeforderten Software-Lizenz von dem Lizenz-Daemon in dem zweiten Computerknoten an den Lizenz-Daemon in dem ersten Computerknoten; und
Trennen einer Verbindung zwischen dem ersten Computerknoten und dem zweiten Computerknoten.

14. Verfahren nach Anspruch 13, wobei:
das Senden der empfangenen Software-Lizenz an den dritten Computerknoten das Senden der empfangenen Software-Lizenz durch den Lizenz-Dämonen in dem ersten Computerknoten an einen Lizenz-Daemon (340) in dem dritten Computerknoten umfasst; und
das Verfahren ferner das automatische Beenden der gesendeten Software-Lizenz nach dem Ablauf des Zeitraums umfasst.

## Revendications

1. Appareil de gestion de licences de logiciels comprenant :
un premier noeud informatique (100) comprenant un dispositif informatique configuré pour être connecté à au moins un deuxième noeud informatique (200) et à un troisième noeud informatique (300) dans un réseau informatique poste à poste ;
dans lequel le premier noeud informatique comprend un contrôleur de gestion de licences de logiciels configuré pour :
recevoir temporairement une licence de logiciel d'un produit logiciel à partir d'un contrôleur de gestion de licences de logiciels dans le deuxième noeud informatique ;
recevoir une requête demandant la licence de logiciel reçue depuis le contrôleur de gestion de licences de logiciels dans le troisième noeud informatique ;
déterminer que la requête se rapporte à un emprunt de la licence de logiciel ou à une vérification de la licence de logiciel ;
quand la demande se rapporte à un emprunt de la licence de logiciel, envoyer la licence de logiciel reçue au contrôleur de gestion de licences de logiciels dans le troisième noeud informatique pour une période de temps ;
quand la demande se rapporte à une vérification de la licence de logiciel :
envoyer une autorisation de licence pour la licence de logiciel reçue pour une période de temps indéfinie au contrôleur de gestion de licences de logiciels dans le troisième noeud informatique ;
envoyer un signal de pulsation au contrôleur de gestion de licences de logiciels dans le troisième noeud informatique pendant une durée de l'autorisation de licence ;
déterminer qu'une réponse au signal de pulsation est reçue ou non ; et
si une réponse au signal de pulsation n'est pas reçue, supprimer l'autorisation de licence envoyée au contrôleur de gestion de licences de logiciels dans le troisième noeud informatique ; et
utiliser la licence de logiciel du produit logiciel au niveau du premier noeud informatique (i) au terme de la période de temps mais pas durant la période de temps quand la requête se rapporte à un emprunt de la licence de logiciel et (ii) après la suppression de l'autorisation de licence accordée au contrôleur de gestion de licences de logiciels dans le troisième noeud informatique quand la requête se rapporte à une vérification de la licence de logiciel.

2. Appareil selon la revendication 1, dans lequel le contrôleur de gestion de licences de logiciels dans le premier noeud informatique comprend un démon de licence (140) configuré pour communiquer avec d'autres démons de licences (240, 340) dans d'autres noeuds informatiques dont les deuxième et troisième noeuds informatiques.

3. Appareil selon la revendication 2, dans lequel le démon de licence dans le premier noeud informatique, en réponse à la réception d'une requête demandant la licence de logiciel depuis un programme demandeur dans le premier noeud informatique, est configuré pour rechercher la licence de logiciel demandée dans le premier noeud informatique.

4. Appareil selon la revendication 3, dans lequel le démon de licence dans le premier noeud informatique, s'il ne trouve pas la licence de logiciel demandée dans le premier noeud informatique, est configuré pour envoyer aux autres démons de licences dans les autres noeuds informatiques une requête d'emprunt de la licence de logiciel demandée.

5. Appareil selon la revendication 1, dans lequel la licence de logiciel fournie au troisième noeud informatique prend fin lors de l'un des événements suivants :
un programme demandeur dans le troisième noeud informatique libère la licence de logiciel ;
le programme demandeur dans le troisième noeud informatique met fin à l'opération ; et
le signal de pulsation provenant du troisième noeud informatique échoue.

6. Appareil selon la revendication 1, dans lequel le premier noeud informatique est configuré pour permettre, quand la requête se rapporte à un emprunt de la licence de logiciel, au troisième noeud informatique d'utiliser la licence de logiciel envoyée pendant que le troisième noeud informatique est déconnecté du premier noeud informatique.

7. Appareil selon la revendication 1, dans lequel le contrôleur de gestion de licences de logiciels dans le premier noeud informatique est configuré en outre pour mettre fin automatiquement à la licence accordée au troisième noeud informatique pour la licence de logiciel empruntée à l'expiration de la période de temps.

8. Système comprenant :
l'appareil comprenant le premier noeud informatique (100) selon l'une quelconque des revendications 1 à 7 ;
le deuxième noeud informatique (200) ; et
le troisième noeud informatique (300) ;
dans lequel un démon de licence (240) dans le deuxième noeud informatique est configuré pour :
déterminer que la licence de logiciel est disponible à partir du deuxième noeud informatique en réponse à une requête par un démon de licence (140) dans le premier noeud informatique ;
marquer la licence de logiciel demandée comme étant utilisée pour une limite de temps demandée ; et
envoyer la licence de logiciel demandée au démon de licence dans le premier noeud informatique.

9. Système selon la revendication 8, dans lequel le premier noeud informatique est configuré pour être déconnecté du deuxième noeud informatique après que le premier noeud informatique a reçu la licence de logiciel depuis le deuxième noeud informatique.

10. Procédé de gestion de licences de logiciels comprenant :
l'exploitation d'un contrôleur de gestion de licences de logiciels dans un premier noeud informatique (100), le premier noeud informatique comprenant un dispositif informatique configuré pour être connecté à au moins un deuxième noeud informatique (200) et un troisième noeud informatique (300) dans un réseau informatique poste à poste ;
la réception temporaire d'une licence de logiciel d'un produit logiciel depuis un contrôleur de gestion de licences de logiciels du deuxième noeud informatique en vue de son utilisation par le contrôleur de gestion de licences de logiciels du premier noeud informatique ;
la réception d'une requête demandant la licence de logiciel reçue depuis le contrôleur de gestion de licences de logiciels dans le troisième noeud informatique ;
la détermination que la demande se rapporte à un emprunt de la licence de logiciel ou à une vérification de la licence de logiciel ;
quand la demande se rapporte à un emprunt de la licence de logiciel, l'envoi, au moyen du contrôleur de gestion de licences de logiciels du premier noeud informatique, de la licence de logiciel reçue au contrôleur de gestion de licences de logiciels dans le troisième noeud informatique pour une période de temps ;
quand la demande se rapporte à une vérification de la licence de logiciel :
l'envoi d'une autorisation de licence pour la licence de logiciel reçue pour une période de temps indéfinie au contrôleur de gestion de licences de logiciels dans le troisième noeud informatique ;
l'envoi d'un signal de pulsation au contrôleur de gestion de licences de logiciels dans le troisième noeud informatique pendant une durée de l'autorisation de licence ;
la détermination qu'une réponse au signal de pulsation est reçue ou non ; et
si une réponse au signal de pulsation n'est pas reçue, la suppression de l'autorisation de licence envoyée au contrôleur de gestion de licences de logiciels dans le troisième noeud informatique ; et l'utilisation de la licence de logiciel du produit logiciel au niveau du premier noeud informatique (i) au terme de la période de temps mais pas durant la période de temps de demande d'emprunt de la licence de logiciel et (ii) après la suppression de l'autorisation de licence accordée au contrôleur de gestion de licences de logiciels dans le troisième noeud informatique quand la requête se rapporte à une vérification de la licence de logiciel.

11. Procédé selon la revendication 10, comprenant en outre :
la coupure d'une connexion entre le premier noeud informatique et the deuxième noeud informatique après que le premier noeud informatique a reçu la licence de logiciel depuis le deuxième noeud informatique.

12. Procédé selon la revendication 10, comprenant en outre :
la réception, dans un démon de licence (140) dans le contrôleur de gestion de licences de logiciels du premier noeud informatique, d'une requête demandant la licence de logiciel depuis un programme demandeur dans le premier noeud informatique ;
la recherche de la licence de logiciel demandée dans le premier noeud informatique ; et
si la licence de logiciel demandée n'est pas trouvée dans le premier noeud informatique, l'envoi d'une demande d'emprunt de la licence de logiciel demandée par le démon de licence dans le premier noeud informatique à d'autres démons de licences (240, 340) dans d'autres noeuds informatiques.

13. Procédé selon la revendication 12, comprenant en outre :
la détermination, par un démon de licence (240) dans le deuxième noeud informatique, que la licence de logiciel demandée est située dans le deuxième noeud informatique ;
le marquage, par le démon de licence dans le deuxième noeud informatique, que la licence de logiciel demandée est utilisée pendant une période de temps demandée ;
l'envoi de la licence de logiciel demandée par le démon de licence dans le deuxième noeud informatique au démon de licence dans le premier noeud informatique ; et
la coupure d'une connexion entre le premier noeud informatique et le deuxième noeud informatique.

14. Procédé selon la revendication 13, dans lequel :
l'envoi de la licence de logiciel reçue au troisième noeud informatique comprend l'envoi de la licence de logiciel reçue par le démon de licence dans le premier noeud informatique à un démon de licence (340) dans le troisième noeud informatique ; et
le procédé comprend en outre la suppression automatique de la licence de logiciel envoyée à l'expiration de la période de temps.
